# EUROPEAN PATENT APPLICATION

(11) **EP 4 837 809 A1**
(43) Date of publication of application: **11.11.2026**
(21) Application number: 25777760.7
(22) Date of filing: 26.03.2025
(51) Int. Cl.: B60W 50/14

(54) **CONTROL METHOD, SYSTEM AND APPARATUS FOR INTELLIGENT ASSISTED DRIVING MODE OF VEHICLE**

(30) Priority: 29.03.2024 CN 202410378143
(71) Applicant: Geely Automobile Research Institute (Ningbo) Co., Ltd., Ningbo, Zhejiang 315336 (CN)
(72) Inventor: LI, Qili, Hangzhou Bay New District Ningbo, Zhejiang 315336 (CN); MA, Zhiyan, Hangzhou Bay New District Ningbo, Zhejiang 315336 (CN); SONG, Chongchong, Hangzhou Bay New District Ningbo, Zhejiang 315336 (CN); JIANG, Yong, Hangzhou Bay New District Ningbo, Zhejiang 315336 (CN); YANG, Ke, Hangzhou Bay New District Ningbo, Zhejiang 315336 (CN); WU, Hao, Hangzhou Bay New District Ningbo, Zhejiang 315336 (CN)
(74) Representative: Michalski Hüttermann & Partner mbB
(86) International application number: PCT/CN2025/084893
(87) International publication number: WO 2025/201367

(57) **Abstract**

A control method for intelligent driver assistance of a vehicle is provided. The method executes the following steps in the intelligent driver assistance mode: obtaining an operating status of a cockpit control module, and determining whether the cockpit control module is abnormal; when the cockpit control module is abnormal, issuing warning information through at least one of an intelligent driver assistance control module, a body control module, or an alarm control module, to prompt a driver to take over the vehicle; and restarting the cockpit control module based on a preset rule. The operating status of the cockpit control module is determined, and when the operating status of the cockpit control module is abnormal, the warning information is issued through any one or more of the intelligent driver assistance control module, the body control module, and the alarm control module, to prompt the driver to take over the vehicle, and the cockpit control module is restarted based on the preset rule. The control method can alert the driver and provide the user with information reference indicating the exit from the intelligent driving, thereby ensuring the safety of the driver.

## Description

### TECHNICAL FIELD

The present disclosure relates to the field of intelligent driver assistance technologies, and in particular, to a control method, system, and apparatus for an intelligent driver assistance mode of a vehicle.

### BACKGROUND

As driver assistance systems become increasingly common in vehicles, current L2 intelligent driving products on the market generally feature a failure-triggered disengagement function. However, this disengagement function lacks a rigorous safety and controllability design logic. For example, the instrument cluster blackout is a critical issue, and after receiving an instrument signal fault, if the intelligent driving function also disengages immediately, the driver loses the opportunity to be alerted. The driver may only notice that the instrument cluster or multimedia system has frozen, and is unaware that the intelligent driving function is also inoperative, thereby posing a safety hazard.

### SUMMARY

In view of the above shortcomings of the related art, an object of the present disclosure is to provide a control method, system and apparatus for an intelligent driver assistance mode of a vehicle, a vehicle-mounted terminal and a vehicle, which can alert a driver when a human-machine interface freezes, so as to alert the driver and provide the user with information reference indicating the exit from the intelligent driving, thereby ensuring the safety of the driver.

In order to achieve the above object and other related objects, the present disclosure provides a control method for intelligent driver assistance of a vehicle, and in an intelligent driver assistance mode, following steps are executed:
obtaining an operating status of a cockpit control module, and determining whether the cockpit control module is abnormal;
when the cockpit control module is abnormal, issuing warning information through at least one of an intelligent driver assistance control module, a vehicle body control module, or an alarm control module to prompt a driver to take over the vehicle; and restarting the cockpit control module based on a preset rule.

In an optional embodiment of the present disclosure, when the cockpit control module is abnormal, issuing the warning information through the intelligent driver assistance control module, the vehicle body control module, or the alarm control module to prompt the driver to take over the vehicle, includes:
determining whether the intelligent driver assistance control module is available;
when the intelligent driver assistance control module is available, issuing the warning information through the intelligent driver assistance control module; and
when the intelligent driver assistance control module is unavailable, issuing the warning information through at least one of the vehicle body control module or the alarm control module.

In an optional embodiment of the present disclosure, restarting the cockpit control module based on the preset rule, includes:
determining whether the intelligent driver assistance control module is available;
when the intelligent driver assistance control module is available, determining, by the intelligent driver assistance control module, whether the driver successfully takes over the vehicle; and
when the driver successfully takes over the vehicle, controlling the intelligent driver assistance control module to exit the intelligent driver assistance mode, and restarting the cockpit control module.

In an optional embodiment of the present disclosure, restarting the cockpit control module based on the preset rule, further includes:
when the intelligent driver assistance control module is unavailable, controlling the vehicle to move based on a pre-stored control strategy, and controlling the cockpit control module to restart.

In an optional embodiment of the present disclosure, determining, by the intelligent driver assistance control module, whether the driver successfully takes over the vehicle, includes:
obtaining an opening degree of an accelerator pedal;
comparing the opening degree of the accelerator pedal with a preset opening degree threshold of the accelerator pedal; and
when the opening degree of the accelerator pedal is greater than the opening degree threshold of the accelerator pedal, determining that the driver takes over the vehicle.

In an optional embodiment of the present disclosure, obtaining the vehicle information and determining whether the driver takes over the vehicle according to the vehicle information, includes:
obtaining an opening degree of a brake pedal;
comparing the opening degree of the brake pedal with a preset opening degree threshold of the brake pedal; and
when the opening degree of the brake pedal is greater than the opening degree threshold of the brake pedal, determining that the driver takes over the vehicle.

In an optional embodiment of the present disclosure, determining, by the intelligent driver assistance control module, whether the driver successfully takes over the vehicle, includes:
obtaining an opening degree of a brake pedal;
comparing the opening degree of the brake pedal with a preset opening degree threshold of the brake pedal; and
when the opening degree of the brake pedal is greater than the opening degree threshold of the brake pedal, determining that the driver takes over the vehicle.

In an optional embodiment of the present disclosure, determining, by the intelligent driver assistance control module, whether the driver successfully takes over the vehicle, includes:
obtaining a steering wheel torque;
comparing the steering wheel torque with a preset steering wheel torque; and
when the steering wheel torque is greater than the steering wheel torque threshold, determining that the driver takes over the vehicle.

Another objective of the present disclosure is to provide a control system for an intelligent driver assistance mode of a vehicle, including:
an obtaining unit, configured to obtain an operating status of a cockpit control module;
a determining unit, configured to determine whether the cockpit control module is abnormal; and
a control unit, configured to: when the cockpit control module is abnormal, enable at least one of an intelligent driver assistance control module, a vehicle body control module, or an alarm control module to issue warning information, to prompt a driver to take over the vehicle; and restart the cockpit control module based on a preset rule.

Another objective of the present disclosure is to provide a control apparatus for an intelligent driver assistance mode of a vehicle, including:
an obtaining unit, configured to obtain an operating status of a cockpit control module;
a determining unit, configured to determine whether the cockpit control module is abnormal; and
a control unit, configured to: when the cockpit control module is abnormal, enable at least one of an intelligent driver assistance control module, a vehicle body control module, or an alarm control module to issue warning information, to prompt a driver to take over a vehicle; and restart the cockpit control module based on a preset rule.

Another objective of the present disclosure is to provide a vehicle-mounted terminal, including at least one memory, at least one processor, and a computer program stored in the at least one memory and executable on the at least one processor, where the at least one processor, when executing the computer program, performs the control method for the intelligent driver assistance mode of the vehicle as described above.

Another objective of the present disclosure is to provide a vehicle, including the above control system for the intelligent driver assistance mode.

By adopting the above technical solution, the practical technical effect is that: the operating status of the cockpit control module is determined by obtaining the operating status of the cockpit control module, and when the operating status of the cockpit control module is abnormal, the warning information is issued through any one or more of the intelligent driver assistance control module, the body control module or the alarm control module, to prompt the driver to take over the vehicle, and the cockpit control module is restarted based on the preset rule. The control method can alert the driver and provide the user with information reference indicating the exit from the intelligent driving, thereby ensuring the safety of the driver.

### BRIEF DESCRIPTION OF DRAWINGS

FIG. 1 is a logic block diagram of a control method for an intelligent driver assistance mode of a vehicle according to an embodiment of the present disclosure.
FIG. 2 is a control logic block diagram when an intelligent driver assistance control module is normally available and a cockpit control module fails according to an embodiment of the present disclosure.
FIG. 3 is a control logic block diagram when an intelligent driver assistance control module and a cockpit control module both fail according to an embodiment of the present disclosure.
FIG. 4 is a control logic block diagram when an SOC chip and an MCU chip in a cabin driving integrated controller both freeze according to an embodiment of the present disclosure.
FIG. 5 is a functional block diagram of a driving assistance system or an apparatus according to an embodiment of the present disclosure.
FIG. 6 is a schematic structural diagram of a vehicle-mounted terminal according to an embodiment of the present disclosure.

### Description of reference signs:

obtaining unit 11; determining unit 12; control unit 13.

### DETAILED DESCRIPTION

Embodiments of the present disclosure are described below through specific examples, and those skilled in the art can easily understand other advantages and effects of the present disclosure from the content disclosed in this specification. The present disclosure may also be implemented or applied through other different specific embodiments, and various details in this specification may also be modified or changed based on different viewpoints and applications without departing from the spirit of the present disclosure. It should be noted that the following embodiments and features in the embodiments may be combined with each other without conflict.

It should be noted that the drawings provided in the following embodiments only schematically illustrate the basic concept of the present disclosure, and thus the drawings shown only the components related to the present disclosure, rather than being drawn based on the number, shape and size of the components in actual implementation. In actual implementation, the type, number and proportion of each component may be arbitrarily changed, and the component layout type may be more complex.

In the description herein, numerous specific details are provided, such as examples of components and/or methods, to provide a thorough understanding of embodiments of the present disclosure. Those skilled in the relevant art may recognize, however, that an embodiment of the present disclosure can be practiced without one or more of the specific details, or by means of other apparatus, systems, assemblies, methods, components, materials, parts, and/or the like. In other instances, well-known structures, materials, or operations are not specifically shown or described in detail to avoid obscuring aspects of embodiments of the present disclosure.

Reference throughout this specification to "one embodiment," "an embodiment," or "a specific embodiment" means that a particular feature, structure, or characteristic described in connection with the embodiment is included in at least one embodiment of the present disclosure and not necessarily in all embodiments. Thus, various appearances of the phrases "in one embodiment," "in an embodiment," or "in a specific embodiment" in various places throughout this specification are not necessarily referring to the same embodiment. Furthermore, the particular features, structures, or characteristics of any particular embodiment of the present disclosure may be combined in any suitable manner with one or more other embodiments. It is to be understood that other variations and modifications of the embodiments of the disclosure described and illustrated herein are possible in light of the teachings herein and are to be considered as part of the spirit and scope of the present disclosure.

It should also be appreciated that one or more of the elements depicted in the drawings can also be implemented in a more separated or integrated manner, or even removed because it is inoperable in certain cases, or provided because it may be useful in accordance with a particular application.

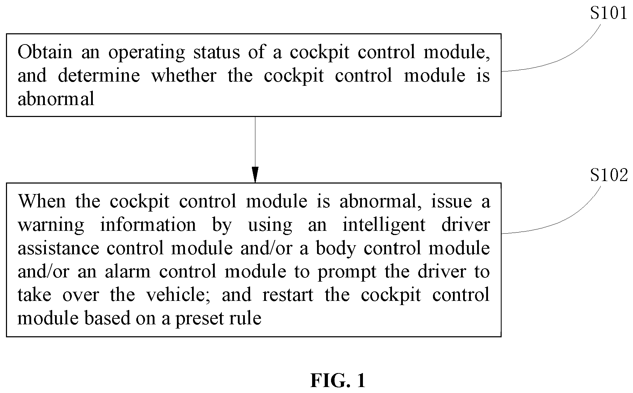

Please refer to FIG. 1 to FIG. 6. It should be noted that the drawings provided in this embodiment only schematically illustrate the basic concept of the present disclosure, and thus the drawings only show the components related to the present disclosure, rather than being drawn based on the number, shape and size of the components in actual implementation. In actual implementation, the type, number and proportion of each component may be arbitrarily changed, and the component layout type may also be more complex.

The present disclosure is developed based on an intelligent driving control system of a vehicle, may be applied to different intelligent driving chip architectures, and may be specifically applied to an intelligent driving system developed based on a cockpit-driving integration solution and a non-cockpit-driving integration solution.

In recent years, the cockpit-driving integration solution has been rapidly developed, benefiting from the significant increase in the computing power of chip manufacturers. With the evolution of vehicle functions, the improvement of electrification levels and the advancement of autonomous driving, the number of ECUs continuously increases, and the traditional distributed electronic/electrical architecture with the single-chip microcomputer as the core is difficult to meet the development requirements of future intelligent vehicle products. In addition, the traditional vehicle ECUs also adopt the distributed architecture, which also reflects that the computing power among the controllers cannot be shared, and when processing similar functional logics, it is difficult to achieve the optimal allocation of computing power resources, resulting in resource waste. At present, the electronic/electrical architecture is continuously evolved towards domain concentration, cross-domain integration and central concentration. In order to reduce the overall cost of the vehicle, the domain controllers emerge at the moment, and the driving-parking integration domain controller is one of them. The cockpit-driving integration solution is developed based on a cockpit-parking integration solution and the driving-parking integration solution, while in the architecture stage of the domain controller, the cockpit-parking integration solution and the driving-parking integration solution are both transitional solutions. With the rapid development in recent years, the cockpit-driving integration solution further improves the intelligence level of the vehicle.

The solution will be described in detail below by taking the cockpit-driving integration solution as an example, the essence of the cockpit-driving integration solution is to perform cross-domain integration of the cockpit domain and the intelligent driving domain, and its function is mainly implemented based on a cockpit-driving integration domain controller (Driver information Head unit, DHU for short). The cockpit domain includes a cockpit control module, and an existing human machine interface (HMI for short) of a vehicle may be considered as a cockpit control module. The HMI (human machine interface of vehicle) is mainly used to realize a human-machine interaction function in the cockpit. The intelligent driving domain includes an intelligent driver assistance control module. An existing common advanced driver assistance system (ADAS for short) may be considered as the most widely used one of the intelligent driver assistance control modules. Both the cockpit control module and the intelligent driver assistance control module are integrated on one SOC chip of a vehicle. The SOC chip integrated with the cockpit control module and the intelligent driver assistance control module may be regarded as a DHU (cockpit-driving integration domain controller); the DHU (cockpit-driving integration domain controller) further includes an MCU chip, the MCU chip is extremely stable, and a body control module (BCM) and a vehicle alarm control module (VACM) are used to operate body control and alarm information of the vehicle based on control instructions sent through the MCU chip in the DHU (cockpit-driving integration domain controller). For example, the instructions include such as flashing an alarm light, vibrating a vehicle steering wheel, vibrating a brake pedal, or sounding an alarm. The MCU chip in the DHU (cockpit-driving integration domain controller) issues instructions to the above mentioned BCM (body control module) or the VACM (vehicle alarm control module), and controls the alarm lamp to flash or emit an alarm sound by using a gateway interface of the TCAM. In general, in addition to extreme situations, the MCU chip in the DHU (cockpit-driving integration domain controller) will not have problems. The intelligent driving module and the intelligent interaction module are integrated on the SOC chip in the DHU (cockpit-driving integration domain controller). Due to the constraints such as computing power and heat generation, the SOC chip in the DHU (cockpit-driving integration domain controller) may be unstable, which is generally manifested as failure of the cockpit control module, such as the blackout of the intelligent interaction screen in the cockpit, and failure of the intelligent driver assistance control module. In this regard, if the SOC chip in the DHU (cockpit-driving integration domain controller) has problems, when the driver is driving normally, the driver sometimes cannot know the intelligent driving operating status of the vehicle in time. For example, when the intelligent interaction screen in the cockpit goes blank, the driver cannot know whether the ADAS can be used normally. For example, when the intelligent interaction screen in the cockpit is normal, but the ADAS (advanced driver assistance system) is already in a fault state, the driver may continue to use the intelligent driving function of the vehicle without prior warning, thereby causing certain safety hazards. Therefore, a control method for an intelligent driver assistance mode is provided, and can be implemented as follows.

The control method is performed on the premise that the vehicle is traveling in the intelligent driver assistance mode. Taking the ADAS (advanced driver assistance system) as an example, the vehicle is traveling with the ADAS (advanced driver assistance system) enabled.

At step S101, an operating status of a cockpit control module is obtained, and it is determined whether the cockpit control module is abnormal.

In some embodiments, a code stream may be reserved in the SOC chip of the vehicle in advance to obtain whether the cockpit control module in the SOC chip is normal, so that the SOC chip has an instruction for obtaining the operating status of the cockpit control module, thereby determining whether the operating status of the cockpit control module in the SOC chip is abnormal.

The operating status of the cockpit control module obtained in step S101 is processed according to a following step S102.

At step S102, when the cockpit control module is abnormal, a warning information is issued by using the intelligent driver assistance control module and/or the body control module (BCM) and/or the vehicle alarm control module (VACM) to prompt the driver to take over the vehicle; and the cockpit control module is restarted based on a preset rule.

In an embodiment, when it is detected that the cockpit control module of the vehicle is abnormal, the warning information is issued through one or more of the intelligent driver assistance control module, the body control module (BCM), or the vehicle alarm control module (VACM), to prompt the driver to take over the vehicle, and the cockpit control module of the vehicle is restarted.

In an embodiment, the body control module (BCM) and the vehicle alarm control module (VACM) are implemented depending on the MCU chip of the vehicle, and the intelligent driver assistance control module is implemented depending on an SOC chip. The code stream may be preset in the MCU chip or the SOC chip in the DHU (cockpit-driving integration domain controller). Once the above situation occurs, a corresponding instruction is issued to control a screen or a speaker in the vehicle to issue warning information, or the body control module (BCM) issues a control signal of the vehicle to control the steering wheel of the vehicle to vibrate or perform a brake pulsing on the vehicle, so as to remind the driver.

In some embodiments, the step of executing a warning signal includes one or more of controlling a brake pulsing, sounding an audible alarm, and vibrating a steering wheel.

In some embodiments, the vehicle may be controlled by the body control module (BCM) to alert the driver, by controlling the brake to perform the brake pulsing or vibrating the steering wheel of the vehicle, or the speaker may be controlled by the vehicle alarm control module (VACM) to emit a warning signal. Any one or more of the above three means can play an alerting role.

In an embodiment, if the driver still does not take over the vehicle, in the step of issuing the warning information through the intelligent driver assistance control module, and/or the body control module (BCM), and/or the vehicle alarm control module (VACM), the vehicle is controlled to issue warning information for a set number of times within a set period.

In an embodiment, the set period ranges from 3 seconds to 10 seconds, and the set number of times ranges from 1 to 4. In some embodiments, the warning information is sent to the driver twice, and generally, at most two warnings are sufficient to achieve the alerting effect.

In an embodiment, taking the emission of an audible warning as an example, a voice warning information may be made in the MCU chip in the DHU (cockpit-driving integration domain controller), with a control loop different from that of the SOC chip in the DHU (cockpit-driving integration domain controller), ensuring that the driver may be notified to take over the vehicle when the cockpit control module freezes. An alarm mechanism of the brake pulsing strategy or the steering wheel vibration strategy and a voice prompt saying "please take over the vehicle" may also be added.

In an embodiment, in the step S102, when the cockpit control module is abnormal, issuing the warning information through the intelligent driver assistance control module, the body control module (BCM), or the vehicle alarm control module (VACM) to prompt the driver to take over the vehicle, includes: determining whether the intelligent driver assistance control module is available.

In an embodiment, a code stream may be reserved in the SOC chip of the DHU (cockpit-driving integration domain controller) in advance, to obtain whether the intelligent driver assistance control module is normal, enabling the SOC chip of the DHU (cockpit-driving integration domain controller) to have an instruction for obtaining the operating status of the intelligent driver assistance control module, thereby determining whether the operating status of the cockpit control module in the SOC chip of the DHU (cockpit-driving integration domain controller) is abnormal.

During actual application of the method, the following two cases further exist.

Case 1: When it is detected that the intelligent driver assistance control module is available, the warning information may be issued by using the intelligent driver assistance control module.

Case 2: When the intelligent driver assistance control module is unavailable, the warning information may be issued by using the vehicle body control module and/or the vehicle alarm control module.

In an embodiment, in the above step S102, the cockpit control module is restarted according to the following preset rule, and when this step is performed, the following two cases exist.

A situation where the intelligent driver assistance control module is available is included. When the intelligent driver assistance control module is available, it is determined, by the intelligent driver assistance control module, whether the driver successfully takes over the vehicle; and when the driver successfully takes over the vehicle, the intelligent driver assistance control module is controlled to exit the intelligent driver assistance mode, and the cockpit control module is restarted.

In an embodiment, in determining, by the intelligent driver assistance control module, whether the driver successfully takes over the vehicle, one or more types of vehicle information among an accelerator pedal opening degree, a steering wheel torque, or a brake pedal opening degree may be obtained, and the determination is made according to the obtained vehicle information, thereby determining whether the driver successfully takes over the vehicle. Once the vehicle is successfully taken over by the driver, the intelligent driver assistance control module can be controlled to exit the intelligent driving mode, and a control instruction is issued to control the cockpit control module to restart.

In an embodiment, in order to obtain the opening degree information of the accelerator pedal, the opening degree information of the accelerator pedal may be obtained through a signal acquisition module in the MCU chip, the opening degree of the accelerator pedal is compared with a preset accelerator opening degree threshold. When the opening degree of the accelerator pedal is greater than the accelerator opening degree threshold, it is determined that the driver takes over the vehicle. In some embodiments, when the opening degree of the accelerator pedal is greater than 40%, it can be determined that the driver takes over the vehicle.

In an embodiment, to obtain the opening degree information of the brake pedal, the opening degree information of the brake pedal may also be obtained through the signal acquisition module in the MCU chip, and the opening degree of the brake pedal is compared with a preset opening degree threshold of the brake pedal. When the opening degree of the brake pedal is greater than the preset opening degree threshold of the brake pedal, it can be determined that the driver takes over the vehicle. In some embodiments, when the opening degree of the brake pedal is greater than 40%, it can be determined that the driver takes over the vehicle.

In an embodiment, to obtain the steering wheel torque information, the steering wheel torque information may also be obtained through the signal acquisition module in the MCU chip, and the steering wheel torque is compared with a preset steering wheel torque threshold. When the steering wheel torque is greater than the steering wheel torque threshold, in some embodiments, when the steering wheel torque is greater than 0.8 Nm, it can be determined that the driver takes over the vehicle. As long as the driver rotates the steering wheel, a steering wheel torque can be applied, thereby determining that the driver has successfully taken over the vehicle.

In an embodiment, during actual application of the system, some special situations may also occur, such as a situation where the intelligent driver assistance control module is unavailable: when the MCU chip in the DHU (cockpit-driving integration domain controller) detects that the intelligent driver assistance control module is unavailable, the vehicle motion is controlled according to the pre-stored control strategy, and the cockpit control module is controlled to restart.

In an embodiment, a lateral trajectory path of 2 to 3 seconds is memorized in the MCU chip in the DHU (cockpit-driving integration domain controller), and a predicted path following module is made in the MCU chip, so as to support that when the intelligent driver assistance control module in the SOC chip in the DHU (cockpit-driving integration domain controller) is unavailable, the MCU chip in the DHU (cockpit-driving integration domain controller) can maintain a lateral control action for 2 to 3 seconds, thereby supporting the driver to take over safely. After the safe takeover by the driver, the cockpit control module is controlled to restart.

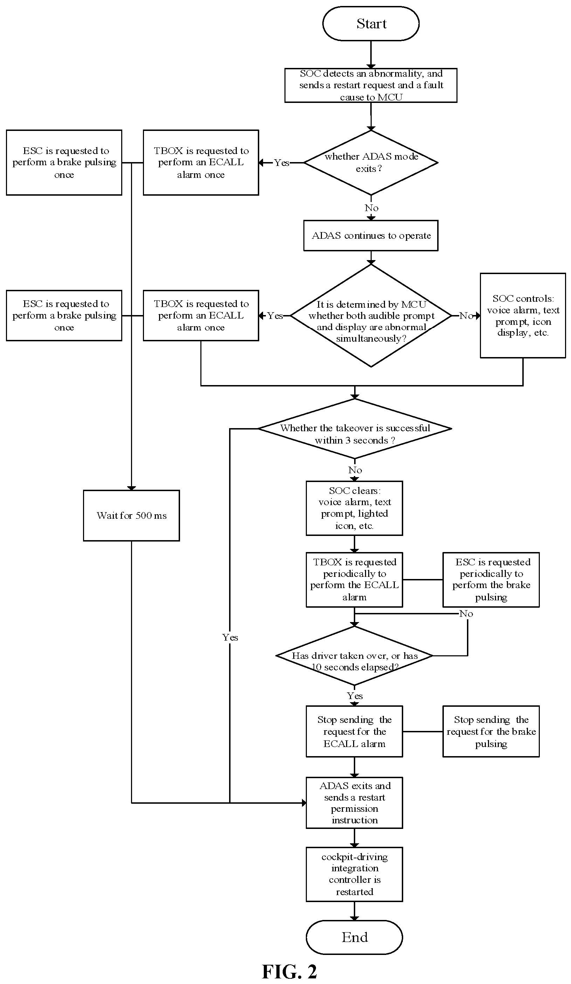

With reference to specific embodiments, referring to FIG. 2, in this case, the cockpit control module fails, and the intelligent driver assistance control module is normally available. The SOC chip in the DHU (cockpit-driving integration domain controller) detects an abnormality, and sends a restart request and a fault cause to the MCU chip in the DHU (cockpit-driving integration domain controller). First, it is determined whether the ADAS (advanced driver assistance system) is in an enabled state. When it is determined that the ADAS (intelligent driver assistance system) is in use, it is determined, by using the MCU chip in the DHU (cockpit-driving integration domain controller), whether both broadcast and display are abnormal at the same time, that is, whether the above cockpit control module is abnormal. When an abnormality occurs, a vehicle-mounted communication terminal (Telematics-B ox, T-BOX for short) is requested to perform a vehicle emergency call system (ECALL for short) alarm once or an ESC is requested to perform a brake pulsing once, that is, the above-mentioned warning information is issued to inform the driver. Whether the driver takes over the vehicle is determined within the set period (3 seconds). When it is determined that the driver takes over the vehicle within the set period, the ADAS (advanced driver assistance system) exits and sends the restart permission instruction, and the DHU (cockpit-driving integration domain controller) is restarted, that is, the above-mentioned cockpit control module is restarted. When it is determined that the driver has not successfully taken over the vehicle within the set period, the SOC chip in the DHU (cockpit-driving integration domain controller) clears: voice alarm, text prompt, lighted icon, etc., and it is determined continuously whether the vehicle is successfully taken over by requesting the T-BOX (vehicle-mounted communication terminal) to execute the ECALL (vehicle emergency call system) alarm for a set number of times or periodically requesting the ESC to execute brake pulsing. The set period is extended (for example, extended to 10 seconds), until it is determined that the driver successfully takes over the vehicle. Then, sending the request for the ECALL (vehicle emergency call system) alarm or sending the request for the brake pulsing is stopped, and the ADAS (advanced driver assistance system) exits and sends the restart permission instruction. The DHU (cockpit-driving integration domain controller) is restarted, that is, the cockpit control module in the DHU (cockpit-driving integration domain controller) is restarted.

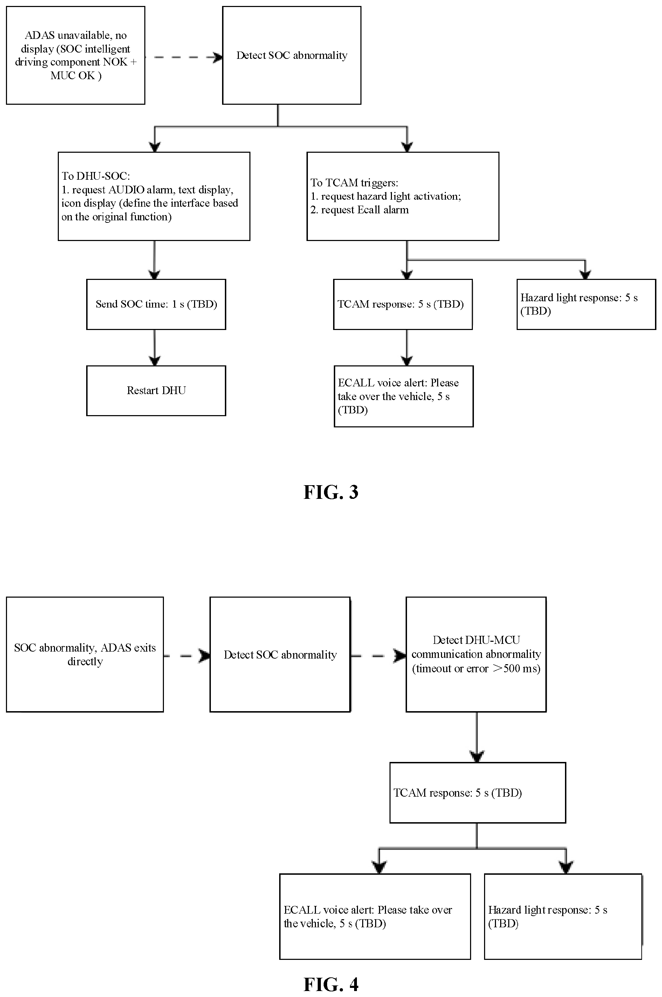

Referring to FIG. 3, in this case, both the cockpit control module and the intelligent driver assistance control module fail. The SOC chip in the DHU (cockpit-driving integration domain controller) detects an abnormality, and sends a restart request and a fault cause to the MCU chip in the DHU (cockpit-driving integration domain controller). A control signal is directly sent to the SOC chip in the DHU (cockpit-driving integration domain controller), to request AUDIO (audio) alarm, text display, icon display, etc., and a control signal is sent to the VACM (alarm controller) (through the TCAM gateway interface) to control ECALL (vehicle emergency call system) alarm. The BCM (vehicle body control module) may be used to control the vehicle hazard lights to flash. The preset response time of the VACM (alarm controller) is set according to the actual situation, and in some embodiments, it may be 5 seconds TBD (To Be Determined, indicating pending). The preset response time of the BCM (vehicle body control module) is set according to the actual situation, and in some embodiments, it may also be 5 seconds TBD.

There is another more extreme situation where the cockpit-driving integration controller (DHU) hangs as whole. In this case, referring to FIG. 4, the SOC chip in the cockpit-driving integration controller (DHU) is in an overheated or damaged condition, the ADAS (advanced driver assistance system) integrated in the SOC chip exits directly. The MCU chip in the cockpit-driving integration controller (DHU) is also in an overheated or damaged condition. The BCM (vehicle body control module) can detect the signal of the MCU chip in the cockpit-driving integration controller (DHU). When there is a timeout or error, such as a timeout of 5 seconds, the ECALL (vehicle emergency call system) alarm can be made through the VACM (alarm controller) (through the TCAM gateway interface), and the BCM (vehicle body control module) can also control the vehicle hazard lights to flash. The preset response time of the VACM (alarm controller) is set according to the actual situation, and in some embodiments, it may be 5 seconds TBD. The preset response time of the BCM (vehicle body control module) is set according to the actual situation, and in some embodiments, it may also be 5 seconds TBD.

The above are all application examples of the cockpit-driving integration solution of the present disclosure. For a non-cockpit-driving integration solution, the cockpit control module and the intelligent driver assistance control module are independent of each other and arranged on different chips. The cockpit control module is controlled by an independent cockpit controller, and the intelligent driver assistance control module is controlled by an independent intelligent driver assistance controller. In the non-cockpit-driving integration solution, the independent cockpit controller and the independent intelligent driver assistance controller can also be monitored according to the foregoing control method for the intelligent driver assistance mode, so as to implement control of the driving assistance mode, thereby providing the user with an information reference for exiting intelligent driving, and ensuring the safety of the driver.

In an embodiment, when the present disclosure is applied to a non-cockpit-driving integration solution, because the cockpit control module and the intelligent driver assistance control module are integrated on different chips, once a problem occurs in any one of the cockpit control module and the intelligent driver assistance control module, a warning can be issued through another intact module to notify the driver to take over the vehicle.

In an embodiment, for example, when a problem occurs in the cockpit control module, warning information can be issued through the intelligent driver assistance control module to prompt the driver to take over the vehicle; the intelligent driver assistance control module determines whether the driver successfully takes over the vehicle; and when the driver successfully takes over the vehicle, the intelligent driver assistance control module is controlled to exit the intelligent driver assistance mode, and the cockpit control module is restarted.

In an embodiment, for example, when a problem occurs in the intelligent driver assistance control module of the cockpit control module, warning information can be issued through the cockpit control module to prompt the driver to take over the vehicle; it is determined through the cockpit control module whether the driver successfully takes over the vehicle; and when the driver successfully takes over the vehicle, the intelligent driver assistance control module is controlled to exit the intelligent driver assistance mode, and the driver may manually restart the intelligent driver assistance control module.

Based on the same inventive concept, the present disclosure further provides a control system for an intelligent driver assistance mode of a vehicle, including:
an obtaining unit 11, configured to obtain an operating status of a cockpit control module;
a determining unit 12, configured to determine whether the cockpit control module is abnormal; and
a control unit 13, configured to: when the cockpit control module is abnormal, enable the intelligent driver assistance control module and/or the vehicle body control module and/or the alarm control module to issue warning information, to prompt the driver to take over the vehicle; and restart the cockpit control module according to a preset rule.

Based on the same inventive concept, the present disclosure further provides a control apparatus for an intelligent driver assistance mode of a vehicle, including:
an obtaining unit 11, configured to obtain an operating status of a cockpit control module;
a determining unit 12, configured to determine whether the cockpit control module is abnormal; and
a control unit 13, configured to: when the cockpit control module is abnormal, enable the intelligent driver assistance control module, and/or the vehicle body control module, and/or the alarm control module to issue warning information, to prompt the driver to take over the vehicle; and restart the cockpit control module according to a preset rule.

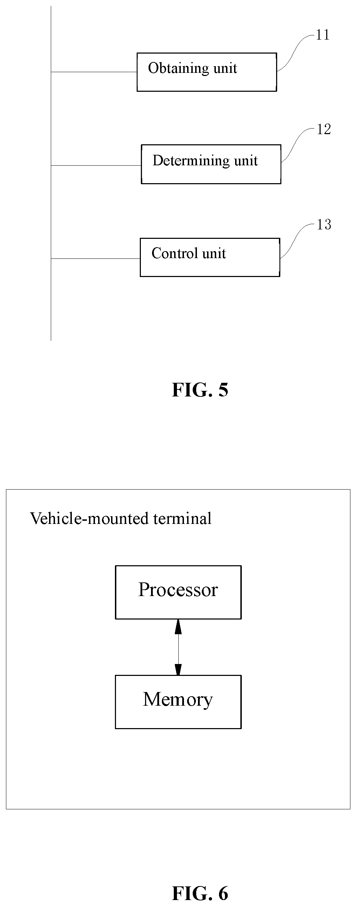

As shown in FIG. 5, which is a functional module diagram of a preferred embodiment of the control system or control apparatus for the intelligent driver assistance mode of the present disclosure, it should be noted that the control system or control apparatus for the intelligent driver assistance mode of the present embodiment is an apparatus corresponding to the control method for the intelligent driver assistance mode, and the functional modules in the control system or control apparatus for the intelligent driver assistance mode correspond to the corresponding steps in the control method for the intelligent driver assistance mode respectively. The control system or control apparatus for the intelligent driver assistance mode in this embodiment may be implemented in cooperation with the control method for the intelligent driver assistance mode. Correspondingly, related technical details of the control system or control apparatus for the intelligent driver assistance mode mentioned in this embodiment may also be applied to the foregoing control method for the intelligent driver assistance mode.

It should be noted that, in actual implementation, the foregoing functional modules may be all or partially integrated into one physical entity, or may be physically separated. In addition, all the modules in the foregoing system may be implemented in a form of software invoked by a processing element; or some modules may be implemented in a form of software invoked by a processing element, and some modules may be implemented in a form of hardware; or all the modules in the foregoing apparatus may be implemented in a form of hardware. In addition, all or some of these modules may be integrated together, or may be implemented separately. The processing element described herein may be an integrated circuit, and has a signal processing capability. In an implementation process, some or all steps of the foregoing methods or the foregoing various functional modules may be implemented by hardware integrated logic circuits in the processor element, or by instructions in a form of software.

It should be noted that the control system for the intelligent driver assistance mode of the present disclosure can alert the driver and can clearly provide specific fault information of the vehicle, thereby ensuring the safety of the driver. On the other hand, the control system for the intelligent driver assistance mode of the present disclosure is suitable for the development of new products and the upgrade of software functions of mass-produced products.

The present disclosure further provides a vehicle-mounted terminal, including a memory, a processor, and a computer program stored in the memory and executable on the processor, where the processor, when executing the computer program, implements the steps of the control method for the intelligent driver assistance mode as described above.

The memory includes at least one type of readable storage medium, and the readable storage medium includes a flash memory, a mobile hard disk, a multimedia card, a card-type memory (for example, an SD or DX memory, etc.), a magnetic memory, a magnetic disk, an optical disk, or the like. In some embodiments, the memory may be an internal storage unit of the electronic device, for example, a mobile hard disk of the electronic device. In some other embodiments, the memory may alternatively be an external storage device of the electronic device, for example, a plug-in mobile hard disk, a smart media card (SMC), a secure digital (SD) card, a flash card, or the like, equipped on the electronic device. In an embodiment of the present disclosure, the memory may be an SOC chip or an MCU chip, and further, the memory may include both an internal storage unit and an external storage device of the electronic device. The memory may not only be configured to store application software and various types of data installed on the electronic device, for example, code of a clinical medical record standardization program, etc., but also be configured to temporarily store data that has been output or is to be output.

In some embodiments, the processor may include an integrated circuit, for example, may include a single packaged integrated circuit, or may include a plurality of integrated circuits with the same function or different functions packaged together, including one or more central processing units (CPU), microprocessors, digital processing chips, graphics processors, combinations of various control chips, and the like. The processor is a control unit of the electronic device, connects various components of the entire electronic device by using various interfaces and lines, and executes various functions and data processing of the electronic device by running or executing a program or a module stored in the memory (for example, executing a clinical medical record standardization program) and invoking data stored in the memory. In an embodiment of the present disclosure, the processor may be an SOC chip or an MCU chip.

The processor executes an operating system of the electronic device and various installed applications. The processor executes the application program to implement the steps of the above control method for the intelligent driver assistance mode, such as the steps shown in FIG. 6.

Illustratively, the computer program may be divided into one or more modules, and the one or more modules are stored in the memory and executed by the processor to complete the present disclosure. The one or more modules may be a series of computer program instruction segments capable of performing specific functions, and the instruction segments are used to describe an execution process of the computer program in the electronic device. For example, the computer program may be divided into a data processing module, an exact matching module, and a fuzzy matching module.

The integrated unit implemented in the form of the software functional module as described above may be stored in a readable storage medium of the vehicle. The above software functional module is stored in a storage medium, and includes several instructions for causing a computer device (which may be a personal computer, a computer device, a network device, or the like) or a processor to perform some functions of the control method for an intelligent driver assistance mode of the present disclosure. In an embodiment of the present disclosure, the integrated unit may be an SOC chip or an MCU chip.

The present disclosure further provides a vehicle including the control system for the intelligent driver assistance mode.

The above description of illustrated embodiments of the present disclosure, including what is described in the abstract of this specification, is not intended to be exhaustive or to limit the present disclosure to the precise forms disclosed herein. While specific embodiments and examples of the present disclosure are described herein for illustrative purposes only, various equivalent modifications are possible within the spirit and scope of the present disclosure, as those skilled in the relevant art will recognize and appreciate. As indicated, these modifications may be made to the present disclosure in light of the above description of the described embodiments of the present disclosure and are to be within the spirit and scope of the present disclosure.

The systems and methods have been generally described herein as being helpful in understanding details of the present disclosure. In addition, numerous specific details have been set forth to provide a thorough understanding of embodiments of the present disclosure. However, those skilled in the relevant art will recognize that an embodiment of the present disclosure can be practiced without one or more of the specific details, or with other devices, systems, assemblies, methods, components, materials, parts, etc. In other instances, well-known structures, materials, and/or operations are not specifically shown or described in detail to avoid obscuring aspects of embodiments of the present disclosure.

Thus, while the present disclosure has been described herein with reference to particular embodiments thereof, a latitude of modification, various changes and substitutions are also within the foregoing disclosures, and it should be appreciated that in some instances, some features of the present disclosure will be employed without corresponding use of other features without departing from the scope and spirit of the disclosure as set forth. Therefore, many modifications may be made to adapt a particular situation or material to the essential scope and spirit of the present disclosure. It is not intended to limit the present disclosure to the particular terms used in following claims and/or to the particular embodiment disclosed as the best mode contemplated for carrying out the present disclosure, but the present disclosure will include any and all embodiments and equivalents falling within the scope of the appended claims. Accordingly, the scope of the present disclosure should be determined only by the appended claims.

## Claims

1. A control method for intelligent driver assistance of a vehicle, wherein in an intelligent driver assistance mode, following steps are executed:
obtaining an operating status of a cockpit control module, and determining whether the cockpit control module is abnormal;
when the cockpit control module is abnormal, issuing warning information through at least one of an intelligent driver assistance control module, a vehicle body control module, or an alarm control module to prompt a driver to take over the vehicle; and restarting the cockpit control module based on a preset rule.

2. The control method for the intelligent driver assistance of the vehicle according to claim 1, wherein when the cockpit control module is abnormal, issuing the warning information through the intelligent driver assistance control module, the vehicle body control module, or the alarm control module to prompt the driver to take over the vehicle, comprises:
determining whether the intelligent driver assistance control module is available;
when the intelligent driver assistance control module is available, issuing the warning information through the intelligent driver assistance control module; and
when the intelligent driver assistance control module is unavailable, issuing the warning information through at least one of the vehicle body control module or the alarm control module.

3. The control method for the intelligent driver assistance of the vehicle according to claim 1, wherein restarting the cockpit control module based on the preset rule, comprises:
determining whether the intelligent driver assistance control module is available;
when the intelligent driver assistance control module is available, determining, by the intelligent driver assistance control module, whether the driver successfully takes over the vehicle; and
when the driver successfully takes over the vehicle, controlling the intelligent driver assistance control module to exit the intelligent driver assistance mode, and restarting the cockpit control module.

4. The control method for the intelligent driver assistance of the vehicle according to claim 1 or 3, wherein restarting the cockpit control module based on the preset rule, further comprises:
when the intelligent driver assistance control module is unavailable, controlling the vehicle to move based on a pre-stored control strategy, and controlling the cockpit control module to restart.

5. The control method for the intelligent driver assistance of the vehicle according to claim 3, wherein determining, by the intelligent driver assistance control module, whether the driver successfully takes over the vehicle, comprises:
obtaining an opening degree of an accelerator pedal;
comparing the opening degree of the accelerator pedal with a preset opening degree threshold of the accelerator pedal; and
when the opening degree of the accelerator pedal is greater than the opening degree threshold of the accelerator pedal, determining that the driver takes over the vehicle.

6. The control method for the intelligent driver assistance mode of the vehicle according to claim 3, wherein determining, by the intelligent driver assistance control module, whether the driver successfully takes over the vehicle, comprises:
obtaining an opening degree of a brake pedal;
comparing the opening degree of the brake pedal with a preset opening degree threshold of the brake pedal; and
when the opening degree of the brake pedal is greater than the opening degree threshold of the brake pedal, determining that the driver takes over the vehicle.

7. The control method for the intelligent driver assistance mode of the vehicle according to claim 3, wherein determining, by the intelligent driver assistance control module, whether the driver successfully takes over the vehicle, comprises:
obtaining a steering wheel torque;
comparing the steering wheel torque with a preset steering wheel torque; and
when the steering wheel torque is greater than the steering wheel torque threshold, determining that the driver takes over the vehicle.

8. A control system for an intelligent driver assistance mode of a vehicle, comprising:
an obtaining unit, configured to obtain an operating status of a cockpit control module;
a determining unit, configured to determine whether the cockpit control module is abnormal; and
a control unit, configured to: when the cockpit control module is abnormal, enable at least one of an intelligent driver assistance control module, a vehicle body control module, or an alarm control module to issue warning information, to prompt a driver to take over the vehicle; and restart the cockpit control module based on a preset rule.

9. A control apparatus for an intelligent driver assistance mode of a vehicle, comprising:
an obtaining unit, configured to obtain an operating status of a cockpit control module;
a determining unit, configured to determine whether the cockpit control module is abnormal; and
a control unit, configured to: when the cockpit control module is abnormal, enable at least one of an intelligent driver assistance control module, a vehicle body control module, or an alarm control module to issue warning information, to prompt a driver to take over the vehicle; and restart the cockpit control module based on a preset rule.

10. A vehicle-mounted terminal, comprising at least one memory, at least one processor, and a computer program stored in the at least one memory and executable on the at least one processor, wherein the at least one processor, when executing the computer program, performs the control method for the intelligent driver assistance mode of the vehicle according to any one of claims 1 to 7.

11. A vehicle, comprising the vehicle-mounted terminal according to claim 10.
